# EUROPEAN PATENT APPLICATION

(11) **EP 3 674 681 A1**
(43) Date of publication of application: **01.07.2020**
(21) Application number: 17922494.4
(22) Date of filing: 25.08.2017
(51) Int. Cl.: G01N 3/56, B65H 57/00

(54) **FILAMENT PATH WEAR TESTER AND FILAMENT PATH WEAR TESTING METHOD**

(71) Applicant: NIPPON STEEL NISSHIN CO., LTD., Chiyoda-ku Tokyo 100-8366 (JP)
(72) Inventor: FUJIHARA, Masaru, Tokyo 100-8366 (JP); MIYAWAKI, DAI, Tokyo 100-8366 (JP)
(74) Representative: Ablett, Graham Keith
(86) International application number: PCT/JP2017/030618
(87) International publication number: WO 2019/038925

(57) **Abstract**

To provide a thread guide wear testing machine (1) allowing a wear test using a thread (3) to be conducted stably.

The present invention relates to a thread guide wear testing machine (1) for wearing a test piece (2) by causing a thread (3) to slide while the thread (3) is in contact with the test piece (2). The thread guide wear testing machine (1) includes a winding reel (12) usable for winding the thread (3) thereon fed from thread feeding means (4). A winding drum (13) for guiding the thread (3) fed from the thread feeding means (4) to the winding reel (12) is provided. The winding drum (13) has an outer peripheral surface in contact with an outer peripheral surface of the winding reel (12). Specimen holding means (35) is provided on a path of the thread (3) fed from the thread feeding means (4) and moving while being wound on the winding reel (12). The specimen holding means (35) holds the test piece (2) in a state of contacting the thread (3) under a predetermined load. Tension adjusting means is provided for adjusting tension on the thread (3) with which the test piece (2) is in contact. Contact retaining means (24) is further provided for retaining a state of contact between the winding reel (12) and the winding drum (13) by pressing the winding reel (12) toward the winding drum (13) .

## Description

### TECHNICAL FIELD

The present invention relates to a thread guide wear testing machine and a thread guide wear testing method for implementation of a test for wear of a steel sheet with a fiber such as a thread.

### BACKGROUND ART

Wear is divided into various forms by a mechanism of causing the wear. Wear caused by contact, sliding motion, etc. between two members includes abrasive wear, adhesion wear, fatigue wear, etc. Wear to be caused is changed by the form or operating situation of a real machine.

In a textile machine part such as a knitting machine or a weaving machine, for example, as a fiber such as a thread makes sliding motion, abrasive wear is caused by the sliding motion relative to a foreign substance such as Al₂O₃ or SiO₂ in the fiber. In addition, many high-function chemical fibers have been developed in recent years for matting with TiO₂ or odor eliminating effect using Ag. Fine particles in these chemical fibers become a cause for serious wear.

Hence, a raw material to form a textile machine part is required not only to have general wear resistance but is particularly required to have thread wear resistance against sliding motion of a fiber.

Such thread wear resistance may be evaluated by a method disclosed in an embodiment of PTL 1 or a method disclosed in an embodiment of PTL 2, for example.

According to PTL 1 and PTL 2, a predetermined thread is pressed against many test pieces, the test piece is moved back and forth while predetermined tension is applied to the thread to make sliding motion between the thread and the test piece, and then the amount of wear of the test piece is measured.

### CITATION LIST

### Patent Literature

PTL 1: Japanese Laid-open Patent Publication No. 11-286852
PTL 2: Japanese Laid-open Patent Publication No. 2003-105504

### SUMMARY OF INVENTION

### Technical Problem

While PTL 1 and PTL 2 mentioned above disclose methods of passing a thread under constant tension over a surface of a specimen for a constant period of time to form wear, these methods are not disclosed in detail and the configuration of a testing machine is not known. Additionally, as a specimen is brought into contact with one fiber, many specimens should be prepared. Further, as sliding motion is caused by moving a thread and a specimen back and forth, the thread is prone be damaged or broken in response to the progress of a wear test. This in fact makes it impossible to conduct the wear test stably.

The present invention has been made in view of the foregoing issue, and is intended to provide a thread guide wear testing machine and a thread guide wear testing method allowing a wear test using a thread to be conducted stably.

### Solution to Problem

A thread guide wear testing machine described in claim 1 is a thread guide wear testing machine for wearing a specimen by causing a thread to slide while the thread is in contact with the specimen. The thread guide wear testing machine includes: thread feeding means; a winding reel usable for winding a thread thereon fed from the thread feeding means; a winding drum provided in contact with an outer peripheral surface of the winding reel and guiding the thread fed from the thread feeding means to the winding reel; specimen holding means provided on a path of the thread fed from the thread feeding means and moving while being wound on the winding reel, the specimen holding means holding the specimen in a state of contacting the thread under a predetermined load; tension adjusting means for adjusting tension on the thread; and contact retaining means for retaining a state of contact between the winding reel and the winding drum.

According to a thread guide wear testing machine described in claim 2, in the thread guide wear testing machine described in claim 1, the winding drum has an outer peripheral surface provided with a guide groove through which the thread fed from the thread feeding means is guided to the winding reel, and the guide groove has a shape tilted from a peripheral direction of the winding drum for winding the thread around the winding reel sequentially in an axis direction of the winding reel.

A thread guide wear testing method described in claim 3 is a thread guide wear testing method implemented by using the thread guide wear testing machine described in claim 1 or 2, wherein the thread fed from the thread feeding means is moved while being wound on the winding reel, and the specimen is held while being brought into contact with the moving thread under a predetermined load, and the specimen and the thread are caused to slide relative to each other, thereby wearing the specimen.

### Advantageous Effects of Invention

The present invention allows adjustment of tension on the thread while the thread is in contact with the specimen and makes sliding motion and retention of a state of contact between the winding reel and the winding drum, so that a wear test using the thread can be implemented stably for a long period of time.

### BRIEF DESCRIPTION OF DRAWINGS

[Fig. 1] Fig. 1 is a schematic view showing the configuration of a thread guide wear testing machine in outline according to an embodiment of the present invention;
[Fig. 2] Fig. 2 is a perspective view showing a winding reel and a winding drum of the thread guide wear testing machine;
[Fig. 3] Fig. 3 is a side view showing the configuration of contact retaining means of the thread guide wear testing machine in outline; and
[Fig. 4] Fig. 4 is a perspective view showing tension adjusting means of the thread guide wear testing machine.

### DESCRIPTION OF EMBODIMENTS

An embodiment of the present invention will be described in detail below.

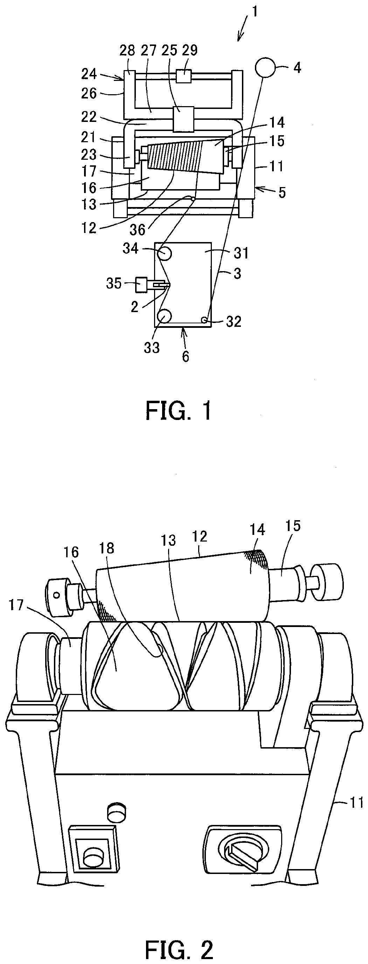

In Fig. 1, 1 represents a thread guide wear testing machine. The thread guide wear testing machine 1 is used for a wear test of wearing a test piece 2 as a specimen by causing a thread 3 to slide while the thread 3 is in contact with the test piece 2.

The thread guide wear testing machine 1 includes a winding unit 5 on which the thread 3 made of any material pulled out and fed from thread feeding means 4 is wound, and a guide unit 6 for guiding the thread 3 from the thread feeding means 4 toward the winding unit 5.

The thread feeding means 4 has an outer peripheral surface around which the thread 3 is wound, and allows pulling out of the wound thread 3 from a tip portion thereof.

The winding unit 5 includes a winding reel 12 and a winding drum 13 each rotatably arranged on top of a base 11 placed on a floor surface.

The winding reel 12 has a reel body 14 made of synthetic resin such as polyvinyl chloride, for example, and formed into what is called a conical shape with one side tapered down in an axis direction. A shaft 15 is fixed in the reel body 14. A first arm 21 is attached in such a manner as to be capable of pivoting at a tip portion 23 about a base portion 22 relative to the base 11. The shaft 15 is rotatably supported on the tip of the first arm 21 to make the reel body 14 rotatable about the shaft 15.

The winding reel 12 is rotated while the tip portion of the thread 3 pulled out of the thread feeding means 4 is fixed to the reel body 14, thereby winding the thread 3 around an outer peripheral surface of the reel body 14.

The winding drum 13 has a drum body 16 made of synthetic resin and formed into a cylindrical shape. A shaft 17 is fixed in the drum body 16. The shaft 17 is rotatably supported on top of the base 11 to make the drum body 16 rotatable about the shaft 17.

The winding drum 13 is arranged in such a manner that the axis direction of the drum body 16 is slightly shifted from the axis direction of the reel body 14, and that an outer peripheral surface of the drum body 16 is in contact with the outer peripheral surface of the reel body 14. With the drum body 16 and the reel body 14 contacting each other in this way, rotating the winding drum 13 using driving means such as a motor, for example, causes the reel body 14 contacting the drum body 16 to further rotate in a direction opposite the drum body 16.

As shown in Fig. 2, the outer peripheral surface of the drum body 16 is provided with a guide groove 18 in which the thread 3 from the thread feeding means 4 can be engaged and through which the engaged thread 3 is guided to the reel body 14.

The guide groove 18 extends in a shape tilted from a peripheral direction of the drum body 16 and forms intersections on the outer peripheral surface.

With the thread 3 from the thread feeding means 4 engaged in the guide groove 18 and with the tip portion of the thread 3 fixed to the reel body 14, rotating the drum body 16 causes the reel body 14 to further rotate in a direction opposite the drum body 16. In response to this rotation, the thread 3 is wound up on the reel body 14, guided along the guide groove 18 having the tilted shape, and wound around the reel body 14 so as to move back and forth sequentially in the axis direction of the reel body 14.

When the amount of the thread 3 being wound up by the winding reel 12 increases, the winding reel 12 is lifted in a direction in which the winding reel 12 is separated from the winding drum 13. This makes a state of contact between the winding reel 12 and the winding drum 13 unstable to cause a rattle, for example. As a result, vibration occurring during winding of the thread 3 is increased. If the vibration is increased, the increased vibration is transmitted to the thread 3 to cause deviation of an angle of contact between the thread 3 and the test piece 2, namely, a wear site. In this way, a wear state may be affected adversely.

In this regard, contact retaining means 24 of retaining a state of contact between the winding reel 12 and the winding drum 13 is provided.

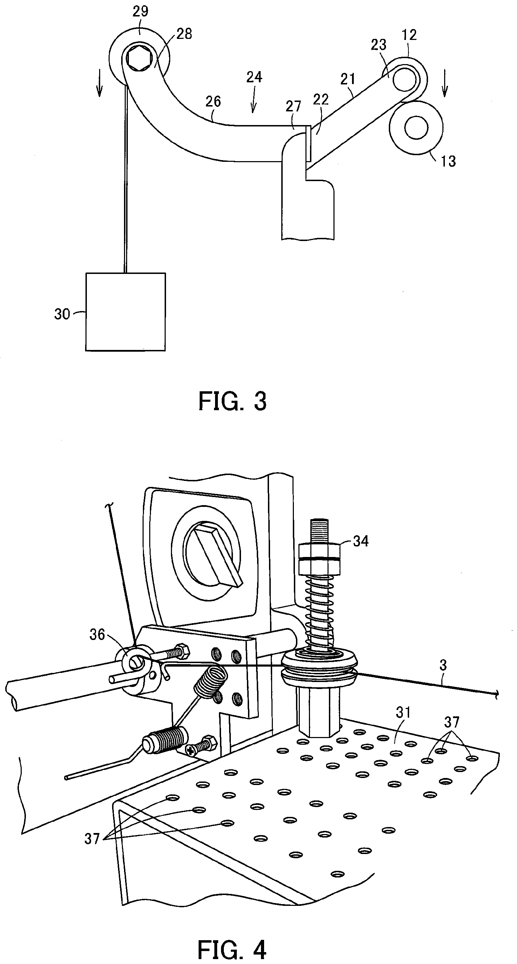

As shown in Fig. 3, the contact retaining means 24 includes a second arm 26 connected via a connection 25 to the base portion 22 of the first arm 21 to which the winding reel 12 is attached.

The second arm 26 is capable of pivoting at a tip portion 28 about a base portion 27 connected to the connection 25. A weight 30 of a predetermined mass (8 kg, for example) is provided to the tip portion 28 of the second arm 26 via an attachment member 29.

The first arm 21 and the second arm 26 are connected at the connection 25 by means of the principle of leverage. More specifically, when a load is applied from the weight 30 in such a manner as to push down the tip portion 28 of the second arm 26, the applied load acts by means of the principle of leverage so as to depress the winding reel 12 provided at the tip portion 23 of the first arm 21 toward the winding drum 13 below the winding reel 12 to press the winding reel 12 against the winding drum 13 in a direction in which the winding reel 12 and the winding drum 13 get closer to each other. In this way, a contact state is retained.

The guide unit 6 includes a guide member 32 fixed on top of a fixing table 31 placed on a floor surface, and support members 33, 34 attached in a removable manner on top of the fixing table 31.

The thread 3 from the thread feeding means 4 is engaged with the guide member 32 and the support members 33, 34 sequentially, guided toward the winding unit 5, engaged with a guide member 36 provided at the base 11, and then guided toward the winding reel 12 and the winding drum 13. More specifically, the thread 3 fed from the thread feeding means 4 is changed in direction at the guide member 32 toward the support member 33, changed in direction at the support member 33 toward the support member 34, changed in direction at the support member 34 toward the guide member 36, changed in direction at the guide member 36 toward the winding drum 13, passed through the guide groove 18 of the winding drum 13, and then wound around the winding reel 12.

Specimen holding means 35 to which a load cell not shown in the drawings is fixed to the fixing table 31. The test piece 2 is fixed to be adjustable in position to the specimen holding means 35.

The test piece 2 fixed in this way to the specimen holding means 35 is retained in a state of contacting the thread 3 between the support members 33, 34 under a predetermined load.

By winding up the thread 3 on the winding reel 12 while the test piece 2 is in contact with the thread 3, the thread 3 from the thread feeding means 4 is moved in one direction toward the winding reel 12 to cause sliding motion under a predetermined load between the thread 3 and the test piece 2.

As shown in Fig. 4, changing the positions of the support members 33, 34 attached to the fixing table 31 makes it possible to adjust tension on the thread 3 with which the test piece 2 is in contact between the thread feeding means 4 and the winding reel 12. Namely, a plurality of openings 37 and the support members 33, 34 at the fixing table 31 function as tension adjusting means.

A thread guide wear testing method implemented by using the thread guide wear testing machine 1 will be described next.

First, the thread 3 is pulled out of the thread feeding means 4. Next, the pulled-out thread 3 is engaged with the guide member 32, the support members 33, 34, and the guide member 36 sequentially, and then fixed to the winding reel 12 through the guide groove 18 of the winding drum 13. In this way, the thread 3 from the thread feeding means 4 is wound around the winding reel 12.

Further, the test piece 2 is fixed to the specimen holding means 35. If necessary, the attachment positions of the support members 33, 34 are changed to adjust tension on the thread 3 and adjust a load of pressing the test piece 2 against the thread 3.

Moreover, the weight 30 is attached to the attachment member 29 of the second arm 26, and a load is applied so as to press the winding reel 12 toward the winding drum 13.

Then, a rotation speed of the winding drum 13 is set in such a manner as to provide a predetermined feed speed. Further, a duration of rotation of the winding drum 13 is set in such a manner as to provide a predetermined wear distance.

Then, the winding drum 13 is rotated to cause sliding motion of the thread 3 relative to the test piece 2, thereby wearing the test piece 2 using the friction of the thread 3.

After the wear test is finished, the amount of wear is measured by measuring weight change or volume change. For example, the shape of the test piece 2 is transferred to replica resin, and a wear part is observed with a laser microscope. Further, a specific wear amount is calculated by measuring the depth of a wear track, etc. through the observation with the laser microscope, thereby evaluating the wear resistance of the test piece 2 against the thread 3.

According to the foregoing embodiment, adjusting the attachment positions of the support members 33, 34 at the fixing table 31 makes it possible to easily adjust tension on the thread 3 to make sliding motion while contacting the test piece 2. Thus, a wear state can be set properly in response to a raw material for the test piece 2 or the type of the thread 3, so that the occurrence of trouble such as damage or break of the thread 3 is prevented during implementation of the wear test.

The wear test is conducted while a load is applied using the weight 30 in such a manner as to press the winding reel 12 toward the winding drum 13. Thus, even if winding of the thread 3 using the winding reel 12 proceeds further to increase the thickness of the thread 3 wound around the outer peripheral surface of the reel body 14, a state of contact is still retained between the winding reel 12 and the winding drum 13. In this way, a state of winding of the thread 3 using the winding reel 12 is stabilized, and trouble resulting from progress of the winding such as deviation of the thread 3 is unlikely to occur. This makes it possible to prevent change in tension on the thread 3 or change in a load of pressing the test piece 2 against the thread 3 to be caused by such trouble to allow development of wear under constant test conditions.

As a result, even if the wear test using the thread 3 is conducted for a relatively long period of time, the wear test can still be conducted stably.

Even with a test piece of some millimeters square considerably small as a test piece for the wear test, the wear test can still be conducted.

Moreover, as a feed speed of a thread, a load on a test piece, tension on the thread, and the type of the thread are changeable, an accelerated test can be conducted by changing these conditions appropriately.

According to the foregoing embodiment, the tension adjusting means is configured to adjust tension on the thread 3 by changing the attachment positions of the support members 33, 34 at the fixing table 31 to which the test piece 2 is fixed. However, this is not the only configuration but the tension adjusting means can be changed appropriately to any configuration allowing adjustment of tension on the thread 3 between the thread feeding means 4, the winding reel 12, and the winding drum 13.

The contact retaining means 24 is configured to retain a contact state by means of the principle of leverage by applying a load in such a manner as to press the winding reel 12 toward the winding drum 13 using the weight 30. However, this is not the only configuration but the contact retaining means 24 may be configured in any way, as long as at least one of the winding reel 12 and the winding drum 13 is pressed in such a manner as to retain a state of contact between the winding reel 12 and the winding drum 13.

### INDUSTRIAL APPLICABILITY

The present invention is applicable to a test for wear of a steel sheet with a fiber such as a thread.

### REFERENCE SIGNS LIST

- 1: Thread guide wear testing machine
- 2: Test piece as specimen
- 3: Thread
- 4: Thread feeding means
- 12: Winding reel
- 13: Winding drum
- 18: Guide groove
- 24: Contact retaining means
- 35: Specimen holding means

## Claims

1. A thread guide wear testing machine for wearing a specimen by causing a thread to slide while the thread is in contact with the specimen, the thread guide wear testing machine comprising:
thread feeding means;
a winding reel usable for winding a thread thereon fed from the thread feeding means;
a winding drum provided in contact with an outer peripheral surface of the winding reel and guiding the thread fed from the thread feeding means to the winding reel;
specimen holding means provided on a path of the thread fed from the thread feeding means and moving while being wound on the winding reel, the specimen holding means holding the specimen in a state of contacting the thread under a predetermined load;
tension adjusting means for adjusting tension on the thread; and
contact retaining means for retaining a state of contact between the winding reel and the winding drum.

2. The thread guide wear testing machine according to claim 1, wherein
the winding drum has an outer peripheral surface provided with a guide groove through which the thread fed from the thread feeding means is guided to the winding reel, and
the guide groove has a shape tilted from a peripheral direction of the winding drum for winding the thread around the winding reel sequentially in an axis direction of the winding reel.

3. A thread guide wear test method implemented by using the thread guide wear testing machine according to claim 1 or 2, wherein
the thread fed from the thread feeding means is moved while being wound on the winding reel, and
the specimen is held while being brought into contact with the moving thread under a predetermined load, and the specimen and the thread are caused to slide relative to each other, thereby wearing the specimen.
